# EUROPÄISCHE PATENTSCHRIFT

(11) **EP 2 778 388 B1**
(45) Veröffentlichungstag und Bekanntmachung des Hinweises auf die Patenterteilung: **25.05.2016**
(21) Anmeldenummer: 14000902.8
(22) Anmeldetag: 13.03.2014
(51) Int. Cl.: F03B 13/00, F03B 17/06

(54) **Innerhalb von Verteilungsleitungen installierte, mit Stromgenerator gekoppelte, radiale Strömungsmaschine**
Radial flow motor installed within distribution ducts coupled with electrical generator
Turbomachine radiale couplée à un générateur de courant et installée à l'intérieur de conduites de distribution

(30) Priorität: 15.03.2013 IT BZ20130015
(43) Veröffentlichungstag der Anmeldung: 17.09.2014
(73) Patentinhaber: Next Energy Srl, 38123 Mattarello (Trento) (IT)
(72) Erfinder: Bridi, Eros, 38123 Mattarello - Trento (IT)
(74) Vertreter: Oberosler, Ludwig

(56) Entgegenhaltungen:
- WO-A1-99/67531
- WO-A1-2009/153020
- CA-A1- 2 581 559
- JP-A- H0 842 440
- US-A- 4 731 545
- US-A1- 2011 187 111

## Beschreibung

Die Erfindung bezieht sich auf eine Strömungsmaschine welche in Verteilungsleitungen flüssiger oder gasförmiger Medien installiert ist um einen Stromgenerator anzutreiben und dabei eine Dissipation der Energie im Trägermedium zu erreichen.

Aus der EP 2110546 A2 ist eine axiale Strömungsmaschine für die Erzeugung von elektrischem Strom bekannt, diese Maschine besteht aus einem axialen Schraubenlaufrad von der Art der Kaplanturbine welche innen in der Rohrleitung des Verteilernetzes eines flüssigen Mediums installiert ist, ohne dessen Außendurchmesser zu verändern. Die Übertragung der Bewegung von der axialen Turbine auf den Stromgenerator erfolgt mittels biegsamer Welle welche von der Rotationsachse der Turbine zur Rotationsachse des Stromgenerators umgelenkt wird, dabei bildet dieser mit seiner Rotationsachse einen stumpfen Winkel zur Rotationsachse des Laufrades, wobei die Welle innerhalb eines Rohres verläuft welches am Rohr der Druckleitung vorgesehen ist und mit dieser den selben stumpfen Winkel bildet. Innen in diesem abzweigenden Rohr sind die Lagerung für das Ende der biegsamen Welle, sowie eine bekannte Dichtungsvorrichtung, vorgesehen. Diese Maschine weist mehrere Nachteile auf, wie den niederen Wirkungsgrad der Turbine welche für große Wassermengen und niederem Druck geeignet ist, den prekären Lauf der biegsamen Welle welcher Geräusch und Vibrationen erzeugt, die begrenzte Lebensdauer und die andauernde, nicht genutzte, Dissipation von Energie. Weiters erfordert das von dem Leitungsrohr abzweigende Rohr, welches mit diesem einen stumpfen Winkel bildet und in welchem die Lagerung und die Dichtungsvorrichtung für den austretenden Teil der Welle vorgesehen sind, eine spezifische Bearbeitung wie sie im Normfall bei der Herstellung von Verbindungs- und Anschlussteilen von Rohrleitungen für die Verteilung flüssiger Medien nicht vorgesehen ist.

Aus der DE 3324326 ist eine, der obgenannten Strömungsmaschine ähnliche, Strömungsmaschine bekannt welche mit einer starren Antriebswelle und mit einem axialen Schraubenrad mit Verteiler mit beweglichen Schaufeln ausgestattet ist um, durch Anpassung der Schaufeln an die veränderlichen Druckwerte und Durchflussmengen, den Wirkungsgrad verbessern zu können. Diese Maschine ist für die Installation an Leitungen mit relativ kleinem Durchmesser, z.B. zwischen 2" bis 4" nicht geeignet, weil der Verteiler mit beweglichen Schaufeln mit relativ kleinen Ausmaßen zu hohe Herstellungs- und Montagespesen verursachen würde und die Funktionstüchtigkeit nicht für längere Zeit gegeben wäre. Weiters würde der Steuermechanismus für die beweglichen Schaufeln des Verteilers welcher ringförmig außen an der Leitung welche das Laufrad enthält angebracht ist, in vielen Fällen zu viel Platz einnehmen.

Aus der JP H08 42440 A ist eine Strömungsmaschine mit radialem Schaufelrad (gemäß Pelton) bekannt, wobei dieses innerhalb einer Verteilerleitung vorgesehen ist und in einem spezifischen Gehäuse untergebracht ist welches größeren Querschnitt als die Verteilerleitung hat. Dieses Gehäuse besteht aus zwei, über Flanschen verbundenen Teilen, von denen ein Teil die Lagerung der durchgehenden Welle des Schaufelrades bildet während der andere Teil ein feststehendes Einleitelement für den Durchfluss des Fluidums aufweist. Ein Schaufelrad dieser Art hat keinen zufriedenstellenden Wirkungsgrad weil nach dem Schaufelrad kein Ausströmelement vorgesehen ist, am Schaufelrad tritt Kavitation auf und im Innern des Gehäuses bilden sich starke Wirbel. Weiters ermöglichen die Ausmaße des Gehäuses öfters nicht den Einbau ohne vorher Änderungen an den Leitungen in unmittelbarer Nähe vorzunehmen.

Aus der WO 99/67531 ist eine Strömungsmaschine mit radialem Schaufelrad (gemäß Pelton) bekannt, wobei dieses innerhalb eines spezifischen, platzaufwändigem Gehäuse untergebracht ist welches versetzte Achsen zwischen Zu- und Ableitung voraussetzt. Die Form dieses Gehäuses ermöglicht den Einbau des Schaufelrades quer zur Durchflussrichtung wobei über eine seitliche Öffnung die Verbindung mit dem Stromgenerator stattfindet. Im Abflussbereich ist im Inneren des Gehäuses eine Verengung vorgesehen um den Rückfluss in Richtung Schaufelrad zu verhindern, diese Anordnung ist nicht geeignet um die Bildung von Wirbel zu verhindern. Diese Konstruktion ist platzaufwändig und wegen der Versetzung zwischen den Achsen der Zu- und Ableitung ist es meist notwendig die anderen Leitungen im Installationsbereich neu zu verlegen.

Aus der WO 2009/153020 A1 ist eine "modulare Vorrichtung für die EnergieRückgewinnung in einem Verteilernetz" mit einem freitragend, innerhalb eines spezifischen mit der Durchflussleitung für ein Fluidum verbundenen Gehäuses, gelagertem Schaufelrad bekannt. Dieses Gehäuse hat größeren Querschnitt als die Leitung. Der Wirkungsgrad dieser Vorrichtung ist bescheiden weil weder ein Einleitelement noch ein Ausströmement vorgesehen ist.

Die Erfindung stellt sich die Aufgabe eine Strömungsmaschine der vorgenannten Art mit hohem Wirkungsgrad, trotz der sich ändernden Bedingungen betreffend Durchflussmenge und Druck des Mediums innerhalb der Leitung, zu schaffen, weiters stellt sich die Erfindung die Aufgabe eine Maschine zu schaffen welche einfach und spesengünstig in der Herstellung und in der Montage ist, verlässlich im Betrieb ist, ein Minimum an Wartung fordert, wenig Platz beansprucht und somit den Einbau ohne Änderungen an den benachbarten Leitungen ermöglicht.

Zur Lösung dieser Aufgabe schlägt die Erfindung den Einsatz eines Schaufelfrades von radialer Art (Pelton) vor, wobei dessen Durchmesser wesentlich dem Innendurchmesser der Rohrleitung entspricht. Dieses Schaufelrad kann eine unterschiedliche Anzahl flacher oder löffelförmiger, einfacher oder doppelter Schaufeln aufweisen welche durch seitliche Scheiben verbunden sind um die Seitenwände der Schaufeln bilden. Diese seitlichen Scheiben weisen erfindungsgemäß, entsprechend jedem Schaufel-Zwischenraum, seitliche freie Durchgänge auf über welche das auf die Schaufeln wirkende Fluidum entleert wird. Erfindungsgemäß können diese seitlichen Durchgänge eine, zur Wellenachse des Schaufelrades, geneigte Achse aufweisen um dadurch eine Kraftkomponente zu erzeugen welche sich auf die Drehung des Schaufelrades vorteilhaft auswirkt; an der Außenseite der Scheiben können die Durchbrüche mit Umlenkkalotten versehen sein. Dieses Schaufelrad der radialen Art ermöglicht eine Lagerung der Weile im rechten Winkel zur Durchflussrichtung des flüssigen Mediums innerhalb der Leitung, dies ermöglicht die eventuelle Nutzung eines T-förmigen Anschlussstückes in welchem das Rohrstück der Abzweigung im rechten Winkel zur Durchflussrichtung, für die Lagerung der Verbindungswelle und der Abdichtvorrichtung nutzbar ist. Der Flansch dieser Abzweigung ist für den Aufbau des Stromgenerators nutzbar welcher seinerseits eventuell mit einem entsprechenden Flansch ausgestattet ist.

Um die Leistung der Strömungsmaschine weiter zu verbessern, schlägt die Erfindung die Verwendung eines wesentlich keilförmigen, vor dem Schaufelrad angeordneten, Einleitelementes und eines wesentlich keilförmigen, nach dem Schaufelrad angeordneten, Ausströmelementes vor. Das Einleitelement ist erfindungsgemäß mindestens im Endbereich mit einem, quer zur Achse der Leitung, schwenkbar gelagertem Element ausgestattet durch welches der freie Durchflussquerschnitt für das Fluidum verändert werden kann. Dieses Element kann über die quer verlaufende Lagerwelle oder durch Verstellen eines radial wirkenden Gewindezapfens mit bekannter Dichtungsvorrichtung verstellt werden. Dieser begrenzte und veränderbare Querschnitt für den Durchfluss des Fluidums welcher den Auftreffbereich des Strahles auf den Schaufeln bestimmt kann, je nach den Durchschnittswerten der Durchflussmenge und des Druckes, mehr oder weniger auf den äußeren Bereich der Schaufel konzentriert sein. Auch die Neigung der Keilfläche des Einleitelementes und/oder des Ausströmelementes kann an die Eigenschaften des Mediums welches durch die Leitung fließt angepasst werden. Natürlich bewirkt das Einleitelement einen Anstieg der Durchflussgeschwindigkeit und des Druckes des auf das Leitrad strömenden Mediums. Das Ausströmelement nach dem Schaufelrad hingegen bewirkt einen störungsfreien Abfluss des vom Schaufelrad abfließenden Mediums, wobei die Bildung von Wirbel und das Auftreten von Kavitation dadurch verhindert werden, dass vom Bereich vor dem Schaufelrad bis zum Bereich nach dem Schaufelrad eine geringe Druckverminderung stattfindet, wobei gleichzeitig nach dem Schaufelrad der, vom Auftraggeber gewünschte, Mindestdruck sichergestellt wird.

Das genannte Einleitelement und Ausströmelement kann sich nur über das T-Stück der Leitung welches das Schaufelrad enthält erstrecken oder über mindestens einen Teil eines Rohrelementes am Einlauf, bzw. am Auslauf des T-Stückes erstrecken. Um die Montageposition des Einleitelementes, bzw. des Ausströmelementes, zu sichern, kann dieses am Einlaufende, bzw. am Auslaufende, mit einem Anschlagvorsprung oder Einsetzvorsprung für einen entsprechenden Sitz im Verbindungsbereich der Rohrelemente ausgestattet sein. Natürlich wird eine Arretierung, z.B. mittels radialem innerem Gewindezapfen welcher in eine entsprechende, innen in der Rohrleitung vorgesehene Blindbohrung eingreift, nicht ausgeschlossen.

Die Erfindung wird anhand eines, in den beigelegten Zeichnungen schematisch dargestellten, vorzuziehenden Ausführungsbeispieles einer erfindungsgemäßen, innerhalb einer Verteilungsleitung installierter, Strömungsmaschine näher erklärt; dabei erfüllen die Zeichnungen rein erklärenden, nicht begrenzenden Zweck.

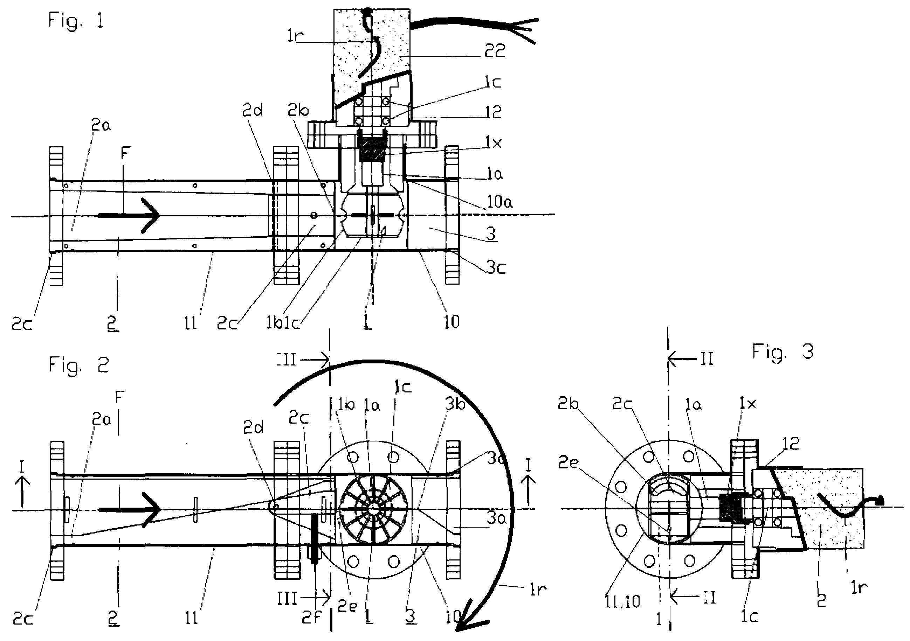

Die Fig. 1 zeigt einen Längsschnitt gemäß der in Fig. 2 gezeigten Schnittebene I-I durch die erfindungsgemäße Strömungsmaschine, wobei die Schnittebene die Achse der Rohrleitung und die Rotationsachse des Schaufelrades und des nicht durchschnittenen Stromgenerators enthält.
Die Fig. 2 zeigt die selbe in Fig. 1 dargestellte Strömungsmaschine im Querschnitt gemäß der in Fig. 3 gezeigten Schnittebene II-II welche die Achse der Rohrleitung enthält und senkrecht zur Rotationsachse des Schaufelrades verläuft.
Die Fig. 3 zeigt die selbe, in den Figuren 1 und 2 dargestellte, Strömungsmaschine in Schnittdarstellung gemäß der in Fig. 2 gezeigten Schnittebene III-III welche sich im rechten Winkel zur Achse der Rohrleitung im Bereich des kleinsten Durchflussquerschnittes des Einleitelementes erstreckt.
Die Fig. 4 ist eine perspektivische Darstellung des Schaufelrades der erfindungsgemäßen Strömungsmaschine.
Die Fig. 5 zeigt ein Funktionsschema der erfindungsgemäßen Strömungsmaschine in einem Leitungskreislauf mit Umgehungsleitung samt Regelventilen und Ejektor am Auslauf nach dem Schaufelrad.
Die Fig. 6 zeigt ein Funktionsschema der erfindungsgemäßen Strömungsmaschine mit Umleitung und Rückführung des Fluidums in den Bereich des Ausströmelementes.

Das Schaufelad dessen größter Durchmesser leicht kleiner als der Innendurchmesser der Rohrleitung, bzw. del T-Elementes 10 und des geradlinigen Teiles 11 der Rohrleitung ist, ist mit einer freitragenden Welle 1 a und mit einer bekannten Dichtungsvorrichtung 1x versehen welche in einem geradlinigen Teil des Rohres 12 eingebaut sind, welches mittels Flansch an dem entsprechenden Flansch des T-Elementes 10 befestigt ist, wobei dieses Rohr eventuell auch den Stromgenerator 22, samt seiner koaxial zur Welle 1 a des Schaufelrades angeordneten Welle, aufnehmen kann und welche mittels elastischer oder magnetischer Kupplung verbunden ist. Die Schaufeln 1 b des Schaufelrades 1 können eine flache Form oder eine einfache, doppelte oder dreifache löffelartige Form aufweisen, und sind über seitliche Scheiben 1 c verbunden welche im rechten Winkel zur Drehachse des Schaufelrades 1 liegen, diese seitlichen Scheiben 1 c weisen, entsprechend jedem Zwischenraumes der Schaufeln, Durchgänge 1d auf welche eventuell außen mit Umlenkkalotten 1f versehen sind um dem austretenden Strahl eine derartige Richtung zu verleihen, dass er die Drehung 1r des Schaufelrades 1 unterstützt.

Strömungsaufwärts, vordem Schaufelrad 1 ist, innerhalb des geradlinigen Elementes 11 und des folgenden koaxialen T-förmigen Elementes 10, ein wesentlich keilförmiges Einleitelement 2 vorgesehen welches am Einlauf einen Vorsprung 2c aufweist welcher in einen entsprechenden Sitz, innen am Flansch des geradlinigen Elementes 11, eingreift. Dieses Einleitelement erstreckt sich gemäß dem Durchfluss F bis zum Schaufelrad 1, es verkleinert im Einlaufbereich des Durchflusses F leicht den Durchflussquerschnitt. Nach einer progressiven Verkleinerung des Durchflussquerschnittes für das flüssige, in Richtung F zum Schaufelrad sich bewegenden flüssigen Mediums, endet das Einleitelement mit einem veränderbaren Querschnitt welcher höchstens dem halben Gesamtquerschnitt der Rohrleitung entspricht, so dass der Durchfluss wesentlich auf den äußeren peripheren Bereich der Brustfläche der Schaufeln auftrifft um am Schaufelrad 1 ein günstiges Drehmoment zu erzeugen. Vor dem Schaufelrad 1 weist das Einleitelement 2 ein, mittels Zapfen 2d schwenkbar 2e gelagertes Element 2c auf. Dieses schwenkbare 2e Element 2c kann mittels dem quer zur Leitungsachse verlaufenden Zapfen 2d oder mittels einem radial wirkendem Gewindezapfen 2f samt bekannter Dichtungsvorrichtung verstellt werden um den Durchflussquerschnitt 2b für das Fluidum, in Abhängigkeit der Durchflussmenge, des Druckes und der zu erreichenden Werte nach dem Schaufelrad, zu verändern. Ein Teil des auf die Schaufeln 1 b wirkenden Fluidums fließt seitlich durch die an den seitlichen Scheiben 1 c vorgesehenen Durchbrüche 1 d ab. Diese Durchbrüche 1d können erfindungsgemäß eine zur Rotationsachse des Schaufelrades 1 geneigte Achse aufweisen und können außen mit Umlenkkalotten 1f versehen sein um eine Umlenkung des austretenden Strahles zu erreichen so dass eine in Drehrichtung 1 r wirkende Kraftkomponente erzeugt wird um den Wirkungsgrad des Schaufelrades zu erhöhen.

Das Ausströmelement 3 ist stromabwärts nach dem Schaufelrad 1 angeordnet, es kann, im Vergleich zum Einleitelement 2, kürzer sein und verhindert die Wirbelbildung am Auslauf des Schaufelrades welche sich nachteilig auf die Schaufeln des Schaufelrades 1 auswirkt, verhindert die Kavitation und begünstigt das störungsfreie Abfließen des Fluidums von den Schaufeln.

Erfindungsgemäß kann die Aufnahme der Drehlager 1c und/oder der bekannten Abdichtvorrichtung 1x vollständig oder teilweise im Inneren jenes Teiles 10a des T-förmigen Elementes 10 vorgesehen sein welcher zur Achse der Rohrleitung einen Winkel von 90° bildet, alternativ dazu können die Drehlager 1c und/oder die Abdichtvorrichtung 1x im inneren des geradlinigen mit Flansch versehenen Teiles 12 vorgesehen sein welcher als Aufnahme und Halterung für den Stromgenerator 22 dient.

Das Einleitelement 2 und das Ausströmelement 3 können austauschbar angeordnet sein und können, in Bezug auf die Durchflussmenge und den Druck des flüssigen Mediums, unterschiedliche Form aufweisen.

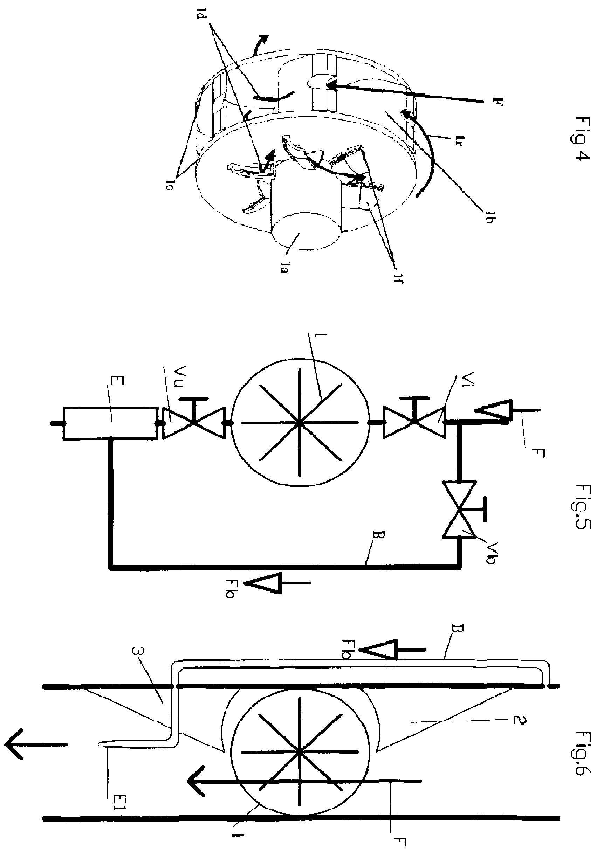

Die erfindungsgemäße Strömungsmaschine kann in einem Kreislauf eingebaut sein welcher mit Umgehungsleitung B, einem Regelventil Vb für den umgelenkten Durchfluss Fb und Regelventile Vi und Vu in der Leitung 11 vor und nach dem Schaufelrad 1, ausgestattet ist. Der umgelenkte Durchfluss Fb, welcher durch die Umgehungsleitung B fließt, ist erfindungsgemäß nutzbar um auf den Durchfluss F nach dem Schaufelrad zu wirken so dass der Abfluss aus dem Schaufelrad begünstigt wird und der Wirkungsgrad am Schaufelrad erhöht wird; um diese Wirkung zusätzlich zu steigern kann der umgelenkte Durchfluss Fb über einen Ejektor E nach dem Schaufelrad 1 eingeleitet werden.
Gemäß einer weiteren Ausgestaltung kann (Fig. 6) eine Umgehungsleitung B1 mit oder ohne Regelventil vorgesehen sein um eine Düse E1 im Bereich des Ausströmelementes 3 zu speisen und dadurch den Abfluss aus dem Schaufelrad zu aktivieren und somit dessen Wirkungsgrad zu steigern.

## Patentansprüche

1. Strömungsmaschine welche innerhalb einer Verteilungsleitung für flüssige oder gasförmige Medien installiert ist, wobei die Antriebswelle des Schaufelrades mit einem Stromgenerator verbunden ist, wobei das Schaufelfrad (1) von radialer Art ist und einen Außendurchmesser hat der leicht kleiner als der Innendurchmesser der Rohrleitung ist welche das Schaufelrad aufnimmt, wobei die Schaufeln (1b) des Schaufelrades (1) flache Form, zur Durchflussrichtung (F) konkave Form oder eine einfache, doppelte oder dreifache Löffelform aufweisen, wobei die Rotationsachse des Schaufelrades (1) im rechten Winkel zur Achse der Rohrleitung angeordnet ist und wobei strömungsaufwärts, vor dem Schaufelrad (1), innerhalb der Rohrleitung ein Einleitelement (2) und stromabwärts, nach dem Schaufelrad (1) ein Ausströmelement (3) vorgesehen ist, **dadurch gekennzeichnet, dass** die einzelnen Schaufeln (1b) des Schaufelrades (1) zwischen zwei seitlichen Scheiben (1c) angeordnet sind welche, entsprechend jedem Zwischenraum zwischen den Schaufeln (1 b), seitliche Durchgänge (1d) für den Abfluss des auf die Schaufeln (1b) wirkenden Fluidums (F) aufweisen.

2. Strömungsmaschine gemäß Anspruch 1, **dadurch gekennzeichnet, dass** die einzelnen seitlichen Durchgänge (1d) eine zur Drehachse der Welle des Schaufelrades (1) geneigte Achse aufweisen so dass der austretende Strahl eine zur Drehrichtung (1 r) des Schaufelrades (1) entgegengesetzte Richtung hat.

3. Strömungsmaschine gemäß Anspruch 1, **dadurch gekennzeichnet, dass** außen an den beiden seitlichen Scheiben (1d) des Schaufelrades (1), an jedem der seitlichen Durchbrüche (1d), Umlenkkalotten (1f) vorgesehen sind welche den austretenden Strahl so ablenken dass er in einer Richtung gegen die Drehrichtung (1r) des Schaufelrades (1) austritt.

4. Strömungsmaschine gemäß Anspruch 1, **dadurch gekennzeichnet, dass** das Schaufelrad (1) im Inneren des geradlinigen Teiles eines T-förmigen Rohrelementes (10) angeordnet ist und dass die Drehlager (1c) für die Welle (1a) des Schaufelrades (1), zusammen mit einer bekannten Abdichtvorrichtung (1x), im Inneren des Rohrstückes (10a) gelagert sind welches in einem Winkel von 90° vom besagten geradlinigen T-förmigen Rohrstück (10) abzweigt.

5. Strömungsmaschine gemäß den Ansprüchen 1 und 4, **dadurch gekennzeichnet, dass** die Drehlager (1c) und/oder die Abdichtvorrichtung (1x) im Inneren eines mit Flansch versehenen Rohrstückes (12) vorgesehen sind welches koaxial mit dem, mit Flansch versehenen, T-förmigen Rohrelement (10) verbunden ist und dass dieses Rohrelement (12) auch als Aufnahme oder als Lagerung des Stromgenerators (2) zusammen mit der entsprechenden elastischen oder magnetischen Kupplung für die Welle (1a) des Schaufelrades (1) dient.

6. Strömungsmaschine gemäß Anspruch 1, **dadurch gekennzeichnet, dass** vor dem Schaufelrad (1) ein keilförmiges Einleitelement (2) vorgesehen ist an welchem ein Element (2c) mittels Zapfen (2d) schwenkbar (2e) gelagert ist und dass dieses Element (2c) von außen über den Zapfen (2d) oder über einen radial angeordneten Gewindezapfen (2f) mit bekannter Dichtungsvorrichtung verstellt werden kann.

7. Strömungsmaschine gemäß Anspruch 1, **dadurch gekennzeichnet, dass** nach dem Schaufelrad (1) ein Ausströmelement (3) vorgesehen ist welches wesentlich keilförmig ist wodurch nahe am Schaufelrad (1) ein halbkreisförmiger oder kreissegmentförmiger Mindestdurchflussquerschnitt gebildet wird während am Austritt vom Ausströmelement der maximale Durchflussquerschnitt gleich dem Innenquerschnitt der Rohrleitung gebildet wird.

8. Strömungsmaschine gemäß den Ansprüchen 1, 6 und 7, **dadurch gekennzeichnet, dass** das Einleitelement (2) und das Ausströmelement (3) austauschbar ist indem beide durch Einrastvorsprünge (2c, 3c), durch Gewindebolzen und/oder durch innen in der Rohrleitung vorgesehene Anschläge in ihrer Arbeitposition gehalten werden.

9. Strömungsmaschine gemäß Anspruch 1, **dadurch gekennzeichnet, dass** diese in einen Kreislauf mit Umlenkleitung (B, B1) eingebaut ist wobei der Durchfluss (Fb) durch diese Umlenkleitung mittels Regelventil (Vb) und der Durchfluss (F) durch die Strömungsmaschine mittels Regelventile (Vi, Vu) verändert werden kann und dass der umgelenkte Durchfluss (Fb), über einen Ejektor (E) oder über eine Düse (E1), in den Bereich nach dem Schaufelrad (1) eingeleitet wird.

## Claims

1. A turbomachine which is installed within a distribution line for liquid or gaseous media, wherein the drive shaft of the impeller is connected to a flow generator, wherein the impeller (1) is of the radial type and has an external diameter which is slightly smaller than the internal diameter of the pipeline accommodating the impeller, wherein the blades (1b) of the impeller (1) have a flat shape, a shape that is concave relative to the flow direction (F) or a single, double or triple spatula shape, wherein the axis of rotation of the impeller (1) is arranged at a right angle to the axis of the pipeline, and wherein an inflow element (2) is provided upstream in front of the impeller (1) within the pipeline and an outflow element (3) is provided downstream after the impeller (1), **characterized in that** the individual blades (1b) of the impeller (1) are arranged between two lateral discs (1c) which have, in a manner corresponding to each intermediate space between the blades (1b), lateral apertures (1d) for the draining of the fluid (F) acting on the blades (1b).

2. The turbomachine according to claim 1, **characterized in that** the individual lateral apertures (1d) have an axis which is inclined with respect to the axis of rotation of the shaft of the impeller (1), so that the exiting jet has a direction opposite to the direction of rotation (1r) of the impeller (1).

3. The turbomachine according to claim 1, **characterized in that** provided externally on the two lateral discs (1d) of the impeller (1), at each of the lateral apertures (1d), are deflecting caps (1f) which deflect the exiting jet in such a way that it exits in a direction counter to the direction of rotation (1r) of the impeller (1).

4. The turbomachine according to claim 1, **characterized in that** the impeller (1) is arranged in the interior of the rectilinear portion of a T-shaped pipe element (10), and **in that** the rotary bearing (1c) for the shaft (1a) of the impeller (1), together with a known sealing device (1x), are mounted in the interior of the pipe section (10a) which branches off from said rectilinear T-shaped pipe section (10) at an angle of 90°.

5. The turbomachine according to claims 1 and 4, **characterized in that** the rotary bearing (1c) and/or the sealing device (1x) are provided in the interior of a flanged pipe section (12) which is connected coaxially to the flanged T-shaped pipe element (10), and **in that** this pipe element (12) also serves for accommodating or mounting the flow generator (2) together with the corresponding elastic or magnetic coupling for the shaft (1a) of the impeller (1).

6. The turbomachine according to claim 1, **characterized in that** a wedge-shaped inflow element (2), on which an element (2c) is pivotably (2e) mounted by means of pins (2d), is provided in front of the impeller (1), and **in that** said element (2c) can be moved from outside via the pins (2d) or via a radially arranged threaded pin (2f) with a known sealing device.

7. The turbomachine according to claim 1, **characterized in that** an outflow element (3) which is substantially wedge-shaped is provided after the impeller (1), as a result of which a semicircular or circle-segment-shaped minimum flow cross-section is formed close to the impeller (1) while the maximum flow cross-section equal to the internal cross-section of the pipeline is formed at the exit from the outflow element.

8. The turbomachine according to claims 1, 6 and 7, **characterized in that** the inflow element (2) and the outflow element (3) are replaceable since both are held in their operating position by latching protrusions (2c, 3c), by threaded bolts and/or by stops provided internally in the pipeline.

9. The turbomachine according to claim 1, **characterized in that** said turbomachine is installed in a circuit having a diverting line (B, B1), wherein the flow (Fb) through said diverting line can be varied by means of a control valve (Vb) and the flow (F) through the turbomachine can be varied by means of control valves (Vi, Vu), and **in that** the diverted flow (Fb) is introduced, via an ejector (E) or via a nozzle (E1), into the region close to the impeller (1).

## Revendications

1. Turbomachine installée à l'intérieur de conduites de distribution pour fluides liquides ou gazeux, l'arbre d'entraînement de la roue à aubes étant couplé à un générateur de courant, la roue à aubes (1) étant de type radial et ayant un diamètre extérieur légèrement inférieur au diamètre intérieur de la conduite renfermant la roue à aubes, les aubes (1b) de la roue à aubes (1) présentant une forme plate, une forme concave dans le sens de l'écoulement du fluide (F) ou une forme en godet simple, double ou triple, l'axe de rotation de la roue à aubes (1) étant placé à angle droit par rapport à l'axe de la conduite, un organe d'entrée (2) placé en amont, avant la roue à aubes (1), et un organe de sortie (3) placé en aval, après la roue à aubes (1), étant prévus à l'intérieur de la conduite, **caractérisée en ce que** les différentes aubes (1b) de la roue à aubes (1) sont disposées entre deux disques latéraux (1c), lesquels comportent des passages latéraux (1d) correspondant à l'espace entre chaque aube (1b) et permettant l'écoulement du fluide (F) agissant sur les aubes (1b).

2. Turbomachine selon la revendication 1, **caractérisée en ce que** les différents passages latéraux (1d) présentent un axe incliné par rapport à l'axe de rotation de l'arbre de la roue à aubes (1) de sorte que le jet sortant soit dans une direction opposée au sens de rotation (1r) de la roue à aubes (1).

3. Turbomachine selon la revendication 1, **caractérisée en ce que** les deux disques latéraux (1d) de la roue à aubes (1) présentent à l'extérieur, au niveau de chacun des passages latéraux (1d), des calottes de renvoi (1f) qui dévient le jet sortant de manière à ce qu'il s'écoule dans une direction opposée au sens de rotation (1r) de la roue à aubes (1).

4. Turbomachine selon la revendication 1, **caractérisée en ce que** la roue à aubes (1) est placée à l'intérieur d'un élément rectiligne d'un élément tubulaire en forme de T (10), et **en ce que** les paliers rotatifs (1c) de l'arbre (1a) de la roue à aubes (1) sont placés, avec un moyen d'étanchéité connu (1x), à l'intérieur de l'élément tubulaire (1a) formant un angle de 90° avec ledit élément tubulaire rectiligne en forme de T (10).

5. Turbomachine selon les revendications 1 et 4, **caractérisée en ce que** les paliers rotatifs (1c) et/ou le moyen d'étanchéité (1x) sont prévus à l'intérieur d'un élément tubulaire (12) étant pourvu d'une bride, lequel est relié coaxialement à l'élément tubulaire en forme de T pourvu d'une bride (10), et **en ce que** cet élément tubulaire (12) serve également de logement ou de palier pour le générateur de courant (2), conjointement avec l'accouplement correspondant, élastique ou magnétique, de l'arbre (1a) de la roue à aubes (1).

6. Turbomachine selon la revendication 1, **caractérisée en ce qu'**un organe d'entrée cunéiforme (2) est prévu en amont de la roue à aubes (1) et comprend un élément (2c) monté en rotation (2e) au moyen d'un pivot (2d), et **en ce que** cet élément (2c) peut être déplacé de l'extérieur, avec le moyen d'étanchéité connu, au moyen du pivot (2d) ou d'une goupille filetée (2f) disposée dans le sens radial.

7. Turbomachine selon la revendication 1, **caractérisée en ce que**, en aval de la roue à aubes (1), se trouve un organe de sortie (3), essentiellement cunéiforme, une section de débit minimum en forme de demi-cercle ou en forme de segment de cercle étant formée à proximité de la roue à aubes (1) alors que, au niveau de l'écoulement de l'organe de sortie, la section de débit maximum est identique à la section intérieur de la conduite tubulaire.

8. Turbomachine selon les revendications 1, 6 et 7, **caractérisée en ce que** l'organe d'entrée (2) et l'organe de sortie (3) peuvent être remplacés, tous deux pouvant être maintenus dans leur position de travail par des éléments d'ancrage (2c, 2c), par des boulons filetées et/ou par des butées prévues à l'intérieur de la conduite tubulaire.

9. Turbomachine selon la revendication 1, **caractérisée en ce qu'**elle est montée dans un circuit avec conduite de renvoi (B, B1), l'écoulement du fluide (Fb) dans cette conduite de renvoi pouvant être modifié au moyen d'une vanne de régulation (Vb), et l'écoulement du fluide (F) dans la turbomachine, au moyen d'une vanne de régulation (Vi, Vu), et **en ce que** l'écoulement du fluide dévié (Fb) est acheminé dans la zone située en aval de la roue à aubes (1) par un éjecteur (E) ou par une buse E1).
